Europäisches Patentamt

European Patent Office

Office européen des brevets

(19)

(11) **EP 1 266 946 A1**

(12) **EUROPEAN PATENT APPLICATION**
published in accordance with Art. 158(3) EPC

(43) Date of publication:
**18.12.2002 Bulletin 2002/51**

(21) Application number: **00981823.8**

(22) Date of filing: **19.12.2000**

(51) Int Cl.7: **C09D 201/00**, C09D 5/03, C09C 1/62

(86) International application number:
**PCT/JP00/08983**

(87) International publication number:
**WO 01/048107 (05.07.2001 Gazette 2001/27)**

(84) Designated Contracting States:
**AT BE CH CY DE DK ES FI FR GB GR IE IT LI LU MC NL PT SE TR**

(30) Priority: **27.12.1999 JP 37030099**

(71) Applicant: **TOYO ALUMINIUM KABUSHIKI KAISHA**
**Osaka-shi, Osaka 541-0056 (JP)**

(72) Inventor: **HASHIZUME, Yoshiki**
**Chuo-ku Osaka-shi Osaka 541-0056 (JP)**

(74) Representative: **Benson, John Everett**
**J. A. Kemp & Co.,**
**14 South Square,**
**Gray's Inn**
**London WC1R 5JJ (GB)**

(54) **COLORED, METALLIC POWDER COATING COMPOSITION AND METHOD FOR PRODUCTION THEREOF**

(57)     A new powder coating composition is provided.
    A colored metallic powder coating composition comprises a colored metallic flake adhered onto each particle surface of a resin powder.

FIG. 3

**Description**

Field of the Invention

The present invention relates to powder coating compositions useful for giving powder metallic finish to automobiles, household appliances, furniture, building materials, toys and the like.

Prior Arts

powder coatings have been increasingly demanded for automobiles, household appliances, building materials, toys and the like as low-pollution coatings free from any organic solvent. When the powder coating is applied to give a colored metallic finish, however, vivid appearance cannot be obtained. Reasons therefor are that a metallic pigment in a powder coating is hardly aligned in parallel to a base, that an amount of a metallic pigment to be incorporated in a powder pigment should be increased to give a metallic sensation as compared with that in a solvent type coating, that a metallic pigment tends to be easily exposed to a surface of a paint film and that even by adding a color pigment, a vivid color tone is hardly obtained since a silver color inherent to the metallic pigment is emphasized. In addition, a metallic pigment in a powder coating is susceptible to separation and/or maldistribution during the melting of the powder coating forming a film and it is susceptible to maldistribution near a surface of a paint film so that a vivid color tone is not obtained.

A metallic pigment previously complexed with a resin by a spray drying method or by means of a brush polisher has been developed for powder coating (for example, see JP-A-51/137725 (1976), JP-B-82/35214 (1982), US Patent No. 4,138,511 and the like). Although the above metallic pigment is effective for improving an adhesion efficiency upon electrostatic powder coating, the aforementioned problem with respect to saturation could not be basically resolved. One possible approach is a melt blending method comprising sufficiently kneading a metallic pigment with a resin and a color pigment via a melting method. According to the melting method, the metallic pigment is susceptible to deformation during a kneading step or a step of controlling a viscosity of a powder coating by pulverizing or any other procedure so that a satisfactory appearance is not obtained. Further, the metallic pigment has exposed active surfaces by pulverizing, for which a risk such as ignition, dust explosion and the like will be increased.

Another approach is a dry blending method comprising mixing a resin powder with a metallic flakes previously powdered by drying and applying the mixture as a powder coating. The use of a colored metallic flake as the metallic flake has been proposed as described in JP-A-09/71734 (1997). In this case, since the resin and the colored metallic flake are separately charged and they are different in adhesion efficiency, the proportion of the resin and the colored metallic flake will be varied when the powder coating is reused after recovering. As the result, a color tone will be varied. Further, the handling of the powdered metallic flakes may increase a risk such as dust explosion and ignition.

Problems to be solved by the Invention

A main object of the present invention is to provide a powder coating composition which resolves problems with respect to appearances such as a vivid color saturation, a metallic sensation, a surface luster of a paint film and the like which are demerits in the prior metallic powder coating and which meets basic requirements as a powder coating such as an adhesion efficiency, a coating workability, a recovery efficiency and the like.

Means for Resolving the Problem

Characteristic of the present invention is to adhere a colored metallic flake onto each particle surface of a resin powder. By adhering a colored metallic flake onto each particle surface of a resin powder, a powder coated paint film having a high saturation (saturation value ≥10) and an excellent metallic sensation can be obtained with a high adhesion efficiency. Since the powder coating recovered can be reused due to a negligible change in composition, the colored metallic powder coating composition of the present invention is wasteless and cost-effective. The colored metallic powder coating composition of the present invention can be easily prepared via a simple step comprising merely adhering a colored metallic flaked onto a resin. In addition, such a step does not adversely affect both a saturation and a brightness of the colored metallic flake.

Example of the powder resin includes polyester resins, acrylic resins, epoxy resins, urethane resins, alkyd resins, fluororesins, silicon resins and the like. One or more of the resins selected from the above can be used. The resin may contain additives such as a hardener, a dispersing agent, an antisagging agent, a static imparting agent, a flatting agent and the like. Further, at least one color pigment selected from phthalocyanine, halogenated phthalocyanine, quinacridone, diketopyrrolopyrrole, isoindolinone, azomethine metal complex, indanthrone, perylene, perinone, anthraquinone, dioxazine, benzimidazolone, condensed azo, triphenylmethane, quinophathalone, anthrapyrimidine, titanium oxide, iron oxide, carbon black and the like may be incorporated in the resin. The resin powder has preferably an average particle size of 10 to 100 μm, more preferably 20 to 50 μm capable of passing through a screen having an opening of 500 μm or less. The average particle size of less than 10 μm may lower a flowability of the resin powder and makes the adhesion of the colored metallic flake onto each particle surface of the resin powder difficult. On the other hand, the average particle size of above 100 μm may increase a surface roughness of a paint film and a thickness of a paint film may become uneven.

It is desirable that the resin powder consists of rounded particles. Since the conventional resin for powder coating is prepared by mechanically pulverizing a bulk resin, the resultant powder is angular and has a poor flowability which may cause a blockage during transport and delivery. According to the process of the present invention, the resin particle becomes rounded, which is the preferable shape for a resin for powder coating, during the step of adhering the colored metallic flake onto each particle surface of the resin powder.

The colored metallic flake used in the present invention is not particularly limited. The colored metallic flake is preferably a metallic flake having a color pigment layer adhered onto each surface thereof and further a coating of a polymer synthesized from a polymerizable monomer on the color pigment layer, as described in JP-A-58/141248 (1983), JP-C-05/508424 (1993), JP-A-01/315470 (1989), JP-A-09/40885 (1997), JP-A-09/59532 (1997), JP-A-09/124973 (1997) and the like. Example of the color pigment can include phthalocyanine, halogenated phthalocyanine, quinacridone, diketopyrrolopyrrole, isoindolinone, azomethine metal complex, indanthrone, perylene, perinone, anthraquinone, dioxazine, benzimidazolone, condensed azo, triphenylmethane, quinophathalone, anthrapyrimidine, titanium oxide, iron oxide, carbon black and bismuth vanadate. The color pigment may be used singly or in mixture.

Example of the polymerizable monomer includes acrylic acid, methacrylic acid, methyl methacrylate, butyl acrylate, 2-ethylhexyl acrylate, lauryl acrylate, stearyl acrylate, cyclohexyl acrylate, 2-hydroxyethyl acrylate, 2-hydroxybutyl acrylate, 2-methoxyethyl acrylate, 2-diethylaminoethyl acrylate, butyl methacrylate, octyl methacrylate, 1,4-butanediol diacrylate, 1,6-hexanediol diacrylate, 1,9-nonanediol diacrylate, neopentyl glycol diacrylate, tripropylene glycol diacrylate, tetraethylene glycol diacrylate, trimethylol propane triacrylate, tetramethylol methane tetraacrylate, pentaerythritol triacrylate, tris-acryloxyethyl phosphate, di-trimethylol propane tetraacrylate, styrene, α-methylstyrene, vinyl toluene, divinyl benzene, acrylonitrile, methacrylonitrile, vinyl acetate, vinyl propionate, maleic acid, crotonic acid, itaconic acid, polybutadiene, linseed oil, soy bean oil, epoxidized soy bean oil, epoxidized polybutadiene, cyclohexene vinyl monooxide and divinyl benzene monooxide. The polymerizable monomer may be used singly or in mixture.

By adhering the color pigment onto each particle surface of the metallic pigment, the lowering in saturation of a paint film due to separation/mal-distribution of the metallic pigment is prevented. Suitable metallic flake to be used as a base includes achromatic metallic flakes such as aluminum, nickel, titanium, stainless steel and the like. Among them, the aluminum flake is particularly suitable since it has an excellent metallic luster, a low cost and a small specific gravity.

In addition to the colored metallic flake to which any color pigment is adhered, a colored metallic flake which is colored by forming an interference membrane or a chromatic thin layer onto each surface of the metallic flake is suitable. Example of such a colored metallic flake includes a titanium flake colored by oxidizing or nitriding; an aluminum flake colored by a chromatic inorganic thin layer such as iron oxide as described in JP-B-01/24182 (1999); and the like.

Preferably, the colored metallic flake has an average particle size of 5 to 50 μm, more preferably 10 to 30 μm and an average thickness of 0.1 to 5 μm, more preferably 0.5 to 2 μm. Its shape factor calculated by dividing an average particle size by an average thickness is preferably in the range of about 5 to 100. The colored metallic flake having an average particle size of less than 5 is not suitable for industrial preparation of metallic flakes. Particularly if its average particle size is 3 μm or less, the color metallic flake becomes blackish and therefore unsuitable for general applications. On the other hand, the average particle size of above 50 μm is also unpreferable sine protrusion of the particles beyond a paint film, breakage of the particles during the process and the like may occur. Similarly, the average thickness of less than 0.1 μm or the shape factor of above 100 is also unpreferable since breakage of the particles during the process and the like may occur. Similarly, the average thickness of above 5 μm or the shape factor of less than 5 is unpreferable since a surface of a paint film becomes rough and the particles may protrude beyond a paint film.

Although chromatic metallic flakes such as copper, bronze and the like may be usable for colored metallic powder coating, their uses are practically impossible due to their poor weather resistance. Gold and the like are not practically used due to its high cost.

Amount of the colored metallic flake is suitably 0.1 to 30 parts by weight, more preferably 1 to 10 parts by weight, per 100 parts by weight of the resin powder. If the amount is less than 0.1 part by weight, satisfactory decorative effect is not obtained. On the other hand, if the amount is above 30 parts by weight, physical properties (weather resistance, corrosion resistance, mechanical strength and the like) and appearance (smoothness, luster and the like) of a powder coated paint film are damaged. Two or more of the colored metallic flakes may be mixed. By mixing two or more of the colored metallic flakes, a powder coated paint film having a multicolor effect, i.e. a color tone being changed depending on view direction, is obtained. Other than the colored metallic flake, other flakes such as mica, surface colored mica, glass flake, surface colored glass flake and the like may be used together.

The method for adhering the colored metallic flake onto each particle surface of the resin powder is not particularly limited. Preferably, the method comprising the steps of coating a dispersion medium with a colored metallic flake in the form of a paste containing an organic solvent; contacting the dispersion medium with the resin powder to transfer and adhere the colored metallic flake to the resin powder; and finally drying to remove the organic solvent is performed in a dispersion apparatus- Since the organic solvent in the pasty colored metallic flake dissolves or swells the resin surface, it is possible to make the resin surface more adherent so that the adhesion of the colored metallic flake onto each surface of the resin powder becomes easy. As the result, the colored metallic flake can be surely adhered onto each particle surface of the resin powder and the particle becomes rounded.

Organic solvent contained in the colored metallic flake is not particularly limited. Hydrocarbons, esters, ketones, alcohols, glycol ethers and the like are suitably used as the organic solvent. When the resin is soluble in water, water may be used. Amount of the organic solvent contained in the pasty colored metallic flake is 0.5 to 90% by weight, preferably 5 to 50% by weight. If it is less than 0.5% by weight, the colored metallic flake is hardly adhered onto each particle surface of the resin powder. If it is above 90% by weight, the resin particles are mutually stuck to form a large mass.

As the dispersion medium, a ball made of any material such as steel, alumina, zirconia, glass and the like having a diameter of about 0.5 to 10 mm is preferably used.

The apparatus used is not particularly limited. Example includes a drying apparatus having a dispersion mechanism such as a ball mill, a vibration mill, a medium stirring mill and the like; and a rolling dryer, a vibrating dryer, a stirring drying and the like. An apparatus capable of dispersing with a dispersion medium and a drying in a vacuum is particularly preferable. Preferable drying condition is a pressure within the apparatus of 30 Torr or less and a temperature of about 30 to 70°C. If the pressure is higher and/or the temperature is lower, drying efficiency is worse. If the temperature is higher, the resin particles are mutually melt and stuck to form a large mass. A drying period is not particularly limited. Generally, it is preferably in the range from about 10 minutes to about 10 hours.

The method for adhering the colored metallic flake onto each particle surface of the resin powder according to the present invention can be applied to any achromatic metallic flakes in addition to the colored metallic flake.

(Action and Effect)

By using the colored metallic powder coating composition of the present invention, a powder coated paint film having a high saturation and an excellent metallic sensation can be obtained with a high adhesion efficiency. And, the colored metallic powder coating composition of the present invention is cost-effective since the change in composition upon coating is negligible and therefore the powder coating recovered can be reused.

The method for preparing the colored metallic powder coating composition of the present invention is safe and cost-effective since the step of predrying a starting colored metallic flake to make a dry powder is omitted. And, complexing of the colored metal flake with the resin powder can be easily and surely effected.

Brief Explanation of Drawings

Fig. 1 is the electron microscope photograph showing the commercially available chromatic aluminum flake of Example 1.

Fig. 2 is the electron microscope photograph showing the polyester resin powder of Example 1.

Fig. 3 is the electron microscope photograph showing the colored metallic powder coating composition of Example 1.

Examples

(Example 1)

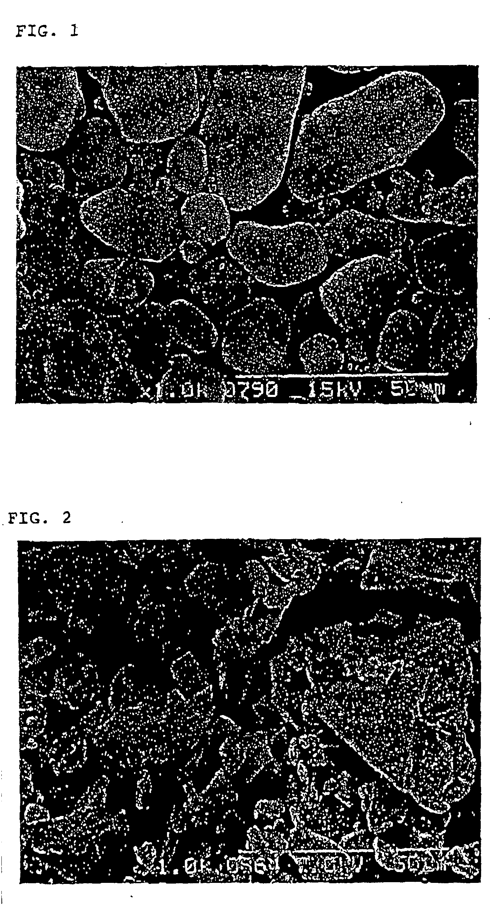

160 Grams (in terms of solid content) of the commercially available colored aluminum flake in the form of a paste (RE 2600 manufactured by Toko Aluminium K.K.) comprising 48% by weight of mineral spirit as a solvent and having an average particle size of 15 μm and an average thickness of 1.5 μm as shown in Fig. 1 and 30 kg of a steel ball having a diameter of 3.2 mm as a dispersion medium were charged into a vibrating dryer and dispersed for 1 hour while fluidizing them by vibrating, thereby the colored aluminum flake was adhered to a surface of the steel ball. Then, 4 kg of a polyester resin powder for powder coating (TEODUR PE 785-900 manufactured by KUBOKO PAINT Co.,

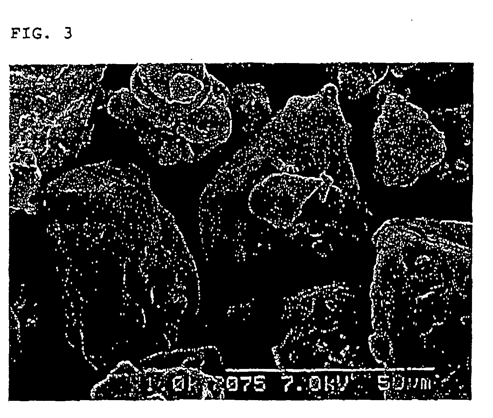

Ltd.) having an average particle size of 40 µm and the shape as shown in Fig. 2 was charged and dispersed for further 1 hour. Finally, the dryer was depressurized to about 10 Torr and then the dispersion was continued while heating at 50°C for further 1 hour. The resultant product was taken out of the dryer and sieved through a screen having an opening of 350 µm to separate the steel ball, thereby a red colored metallic powder coating composition was obtained. As shown in Fig. 3 which is the electron microscope photograph of the resultant colored metallic powder coating composition, the powder coating composition became rounded as compared with the original resin powder. It had an average particle size of 45 µm.

(Example 2)

80 Grams (in terms of solid content) of the commercially available colored aluminum flake in the form of a paste (VARIOCROM L2000 manufactured by BASF) comprising 30% by weight of a solvent and having an average particle size of 12 µm and an average thickness of 0.7 µm and 20 kg of an alumina ball having a diameter of 2 mm as a dispersion medium were charged into a vibrating dryer and dispersed for 30 minutes while fluidizing them by vibrating, thereby the colored aluminum flake was adhered to a surface of the alumina ball. Then, 2 kg of a polyester resin powder for powder coating (TEODUR PE 785-900 manufactured by KUBOKO PAINT Co., Ltd.) was charged and dispersed for further 30 minutes. Finally, the dryer was depressurized to about 10 Torr and then the dispersion was continued while heating at 50°C for further 30 minutes. The resultant product was taken out of the dryer and sieved through a screen having an opening of 350 µm to separate the alumina ball, thereby a gold colored metallic powder coating composition was obtained. It had an average particle size of 45 µm.

(Examples 3 to 6 and Comparative Examples 1 to 3)

Example 1 was repeated provided that the type of a colored metallic flake, the type of a resin powder and the particle size of a final product were changed as shown in Table 1. In Comparative Examples, an uncolored metallic flake was used. Thereby, the colored metallic powder coating powder composition of each of Examples 3 to 6 and Comparative Examples 1 to 3 was prepared.

(Comparative Example 4)

The commercially available colored aluminum flake (RE 2600 manufactured by Toko Aluminium K.K.) was dispersed in n-hexane. The dispersion was filtered and then dried to obtain a colored aluminum flake powder. 8 Grams of the colored aluminum flake powder and 200 g of a polyester resin powder for powder coating (TEODUR PE 785-900 manufactured by KUBOKO PAINT Co., Ltd.) were mixed in a small-sized V type mixer, thereby a dry-blended powder coating was prepared.

(Comparative Example 5)

200 Grams of the commercially available polyester resin (HB 340 manufactured by Daicel U.C.B. K.K.), 5 g of the commercially available diketopyrrolopyrrole red pigment (Irgazin DPP Rubine TR manufactured by CHIBA SPECIALITY CHEMICALS K.K.) and 11.4 g of the commercially available aluminum paste (TCR 2060 manufactured by Toyo Aluminium K.K.) were melt and kneaded at 75°C in a screw extruder to extrude into a sheet. The resultant sheet was pulverized by means of a cutter type pulverizer for resin to obtain a melt-blended powder coating having an average particle size of 40 µm. The powder coating was angular and contained much fine particles.

Formulation of the colored metallic powder coating composition obtained in each of Examples and Comparative Examples except for Comparative Examples 4 and 5 are shown in Table 1.

Table 1

Formulation of colored metallic powder coating composition

| | colored metallic flake | | | type of resin powder | final product | |
| | type (pigment) | average particle size (μm) | average thick-ness (μm) | | average particle size (μm) | shape |
|---|---|---|---|---|---|---|
| Ex. 1 | RED colored aluminum (diketopyrrolopyrole) | 15 | 1.5 | polyester | 45 | rounded |
| Ex. 2 | GOLD colored aluminum *iron oxide thin layer | 12 | 0.7 | polyester | 45 | rounded |
| Ex. 3 | BLUE colored aluminum (phthalocyanine blue) | 20 | 1.7 | acrylic | 30 | rounded |
| Ex. 4 | VIOLET colored titanium *interference membrane | 45 | 3.0 | poly-urethane | 60 | rounded |
| Ex. 5 | YELLOW colored aluminum (bismuth vanadate) | 10 | 1.0 | polyester | 120 | rounded |
| Ex. 6 | YELLOW colored aluminum (bismuth vanadate) | 10 | 1.0 | polyester | 4 | angular |
| Comp. Ex. 1 | aluminum flake *uncolored | 15 | 1.0 | colored polyester (RED) | 45 | rounded |
| Comp. Ex. 2 | aluminum flake *uncolored | 15 | 1.0 | colored poly-urethane (BLUE) | 45 | rounded |
| Comp. Ex. 3 | bronze flake | 10 | 0.5 | polyester | 45 | rounded |

Average particle size was obtained according to the method for determining particle size distribution by laser diffraction. Average thickness was obtained by randomly selecting 10 particles in SEM photograph determining the thickness of each particle and calculating its average.

(Test)

The powder coating obtained in each of the Examples 1 to 6 and Comparative Examples 1 to 5 was applied to two tin plates by means of the electrostatic powder coater (model MPSI-C manufactured by MATSUO SANGYO CO. LTD) at an applied voltage of 90 kv.

One plate was baked at 180°C for 20 minutes. The coated panel was tested for color tone. That is, its metallic sensation was tested visually and its saturation value $c(=\sqrt{a^2+b^2})$ was tested using a colorimeter (model SM-6-CH manufactured by Suga Test Instruments Co., Ltd.). Further, the coated panel was subjected to an apparatus for testing accelerated weather resistance (model QUV/SE manufactured by Q-PANEL COMPANY) to determine the change in color tone after 500 hours.

With respect to another tin plate, the coating adhered onto the tin plate was removed from the plate and incinerated at 800°C. After the residue was dissolved in an alkaline solution, an amount of a metal contained therein was determined by ICP emission spectroscopy. Adhesion efficiency of the metallic flake was calculated by dividing a metal content (%) as analyzed above by a metal content (%) in an original composition and then multiplying by 100. Results are shown in Table 2. The coating workability upon electrostatic powder coating is also shown in Table 2.

## Table 2

### Results of properties of colored metallic powder coating composition

| powder coating | coating workability | metallic sensation | satura-tion | weather resistance | adhesion efficiency |
|---|---|---|---|---|---|
| Ex. 1 | ◯ | 5 | 24.5 | ◯ | 99 |
| Ex. 2 | ◯ | 5 | 31.1 | ◯ | 98 |
| Ex. 3 | ◯ | 5 | 24.4 | ◯ | 100 |
| Ex. 4 | ◯ | 5 | 11.3 | ◯ | 99 |
| Ex. 5 | ◯ | 5 | 19.6 | ◯ | 97 |
| Ex. 6 | △ (many dust) | 4 | 14.3 | ◯ | 95 |
| Comp. Ex. 1 | ◯ | 5 | 2.1 | ◯ | 96 |
| Comp. Ex. 2 | ◯ | 5 | 3.9 | ◯ | 97 |
| Comp. Ex. 3 | ◯ | 5 | 8.5 | ✕ (severe discolora-tion) | 91 |
| Comp. Ex. 4 | ✕ (many dust; poor flowability) | 5 | 26.8 | ◯ | 56 |
| Comp. Ex. 5 | ✕ (many dust; poor flowability) | 2 | 12.3 | ◯ | 98 |

## Claims

1. A colored metallic powder coating composition comprising a colored metallic flake adhered onto each particle surface of a resin powder.

2. A colored metallic powder coating composition as claimed in Claim 1 wherein the colored metallic flake is colored by adhering a color pigment onto each surface of the flake.

3. A colored metallic powder coating composition as claimed in Claim 1 wherein the colored metallic flake is colored by forming an interference membrane or a chromatic inorganic thin layer on each surface of the flake.

4. A color metallic powder coating composition as claimed in any one of Claims 1 to 3 wherein the resin powder comprises round particles having an average particle size of 10 to 100 $\mu$m, the colored metallic flake to be adhered has an average particle size of 5 to 50 $\mu$m and an average thickness of 0.1 to 5.0 $\mu$m, and the colored metallic flake in an amount of 0.1 to 30 parts by weight per 100 parts by weight of the resin powder is adhered.

5. A colored metallic powder coating composition as claimed in any one of Claims 1 to 4 wherein the resultant paint film has a saturation value $c(=\sqrt{a^2+b^2})$ of 10 or higher.

6. A method for preparing a colored metallic powder coating composition comprising the steps of:

coating a dispersion medium with a colored metallic flake in the form of a paste containing an organic solvent;
contacting the dispersion medium coated with the colored metallic flake with a resin powder to transfer and adhere the colored metallic flake to the resin powder; and
drying the resin powder to which the colored metallic flake is adhered by heating it under a reduced pressure to remove the organic solvent.

FIG. 1

FIG. 2

FIG. 3

**EP 1 266 946 A1**

| INTERNATIONAL SEARCH REPORT | International application No. |
|---|---|
| | PCT/JP00/08983 |

| A. CLASSIFICATION OF SUBJECT MATTER |
|---|
| Int.Cl⁷  C09D201/00, C09D5/03, C09C1/62 |

According to International Patent Classification (IPC) or to both national classification and IPC

| B. FIELDS SEARCHED |
|---|
| Minimum documentation searched (classification system followed by classification symbols)<br>    Int.Cl⁷  C09D201/00, C09D5/03, C09C1/62 |
| Documentation searched other than minimum documentation to the extent that such documents are included in the fields searched |
| Electronic data base consulted during the international search (name of data base and, where practicable, search terms used)<br>    WPI (DIALOG) |

**C. DOCUMENTS CONSIDERED TO BE RELEVANT**

| Category* | Citation of document, with indication, where appropriate, of the relevant passages | Relevant to claim No. |
|---|---|---|
| A | US, 4003872, A (Aluminum Company of America), 18 January, 1977 (18.01.77) & NL, 7409837, A    & DE, 2434855, A1 & FR, 2237927, A1    & GB, 1485388, A & CA, 1044392, A1    & CA, 1044394, A1 | 1-6 |
| A | JP, 10-130546, A (Nippon Carbide Industries Co., Ltd.), 19 May, 1998 (19.05.98)   (Family: none) | 1-6 |
| A | JP, 63-102102, A (Japan Synthetic Rubber Co., Ltd.), 07 May, 1988 (07.05.88)   (Family: none) | 1-6 |
| A | JP, 54-17938, A (NIPPON PAINT CO., LTD.), 09 February, 1979 (09.02.79)   (Family: none) | 1-6 |
| A | JP, 52-128927, A (KANSAI PAINT CO., LTD.), 28 October, 1977 (28.10.77)   (Family: none) | 1-6 |
| A | JP, 50-124935, A (Oike Ind. Co., Ltd.), 01 October, 1975 (01.10.75)   (Family: none) | 1-6 |

☒ Further documents are listed in the continuation of Box C.        ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
|    12 March, 2001 (12.03.01) |    27 March, 2001 (27.03.01) |

| Name and mailing address of the ISA/ | Authorized officer |
|---|---|
|    Japanese Patent Office | |
| Facsimile No. | Telephone No. |

Form PCT/ISA/210 (second sheet) (July 1992)

INTERNATIONAL SEARCH REPORT

International application No.

PCT/JP00/08983

C (Continuation). DOCUMENTS CONSIDERED TO BE RELEVANT

| Category* | Citation of document, with indication, where appropriate, of the relevant passages | Relevant to claim No. |
|---|---|---|
| A | JP, 10-292136, A (Asahi Chemical Industry Co., Ltd.), 04 November, 1998 (04.11.98) (Family: none) | 1-6 |

Form PCT/ISA/210 (continuation of second sheet) (July 1992)